# EUROPEAN PATENT SPECIFICATION

(11) **EP 2 786 797 B1**
(45) Date of publication and mention of the grant of the patent: **23.01.2019**
(21) Application number: 10844077.7
(22) Date of filing: 26.03.2010
(51) Int. Cl.: B01D 61/08, C02F 1/44

(54) **REVERSE OSMOSIS DESALINATION MODULES**
UMKEHROSMOSE-ENTSALZUNGSMODULE
MODULES DE DÉSALINISATION À OSMOSE INVERSE

(30) Priority: 20.01.2010 RU 2010101541
(43) Date of publication of application: 08.10.2014
(73) Proprietor: Aqua-Life Spolka z ograniczona odpowiedzialnoscia Spolka Komandytowa, 63-600 Kepno (PL)
(72) Inventor: Fjodorovich, Fomin Vladimir, Volgograd 400123 (RU)
(74) Representative: Bucher, Ralf Christian
(86) International application number: PCT/RU2010/000137
(87) International publication number: WO 2011/090399

(56) References cited:
- EP-A1- 1 614 661
- EP-A2- 0 592 372
- WO-A1-00/57997
- WO-A1-98/23361
- RU-C2- 2 190 460
- RU-U1- 88 664
- US-A- 4 125 463
- US-A- 4 731 181
- US-A1- 2004 104 157
- US-A1- 2008 093 275
- US-A1- 2008 190 848

## Description

### FIELD OF THE INVENTION

The claimed invention relates to reverse osmosis desalination plants for purifying and desalting seawater.

### BACKGROUND OF THE INVENTION

A module for a reverse osmosis desalination plant is disclosed in Patent ES2226537 published on March 16, 2005.

The prior art desalination plant module is disadvantageous because modular design is only used in the membrane element. For this reason, the plant still has a large number of pipelines connecting the modules to pumps and their common main ducts. As a result, the assembly, maintenance, and repair of the desalination plant are complicated. Furthermore, the prior art reverse osmosis desalination plant takes up much space because of the large number of pipelines. The prior art plant is also disadvantageous because water delivered to the membrane element is not filtered.

Further reverse osmosis desalination modules are known from EP0592372A2 and WO98/23361A1.

### SUMMARY OF THE INVENTION

The technical effect of the claimed invention is an autonomous reverse osmosis desalination module (desalination plant module) that can be used alone to desalt seawater or be combined with other modules. In the latter case, a desalination plant consisting of several modules has a small size as well. Furthermore, the desalination plant module itself has a modular design and, as a result, is highly reliable and easy to repair.

Additional technical effects are that the desalination plant module comprises a filter to purify low-pressure salt water delivered to the hydraulic drive unit and that the filter has a modular design.

Reverse osmosis desalination modules, with which these technical effects can be achieved, are defined in the independent claims.

These technical results are achieved in a reverse osmosis desalination module comprising four sequentially docked units, in particular, a hydraulic drive unit, a filter unit, a hydraulic manifold unit, and a membrane element unit, the hydraulic manifold unit having a housing that can be connected to the housing of the hydraulic manifold unit of a next reverse osmosis desalination module, and arranged inside the housing: three main ducts: to deliver low-pressure salt water, withdraw low-pressure brine, and withdraw desalted water, respectively; a duct to deliver high-pressure salt water flowing through the filter unit from the hydraulic drive unit to the membrane element unit; a duct to withdraw high-pressure brine flowing through the filter unit to the hydraulic drive unit from the membrane element unit; a duct to deliver low-pressure salt water to the filter unit from a respective main duct, said low-pressure salt water being filtered in the filter unit before being delivered to the hydraulic drive unit; a duct to withdraw low-pressure brine from the hydraulic drive unit and remove filtered particles from the filter unit to a respective main duct; and a duct to withdraw desalted water from the membrane element unit to a respective main duct.

The filter unit may be of a self-cleaning type and be further provided with a duct to remove particles retained by the filter connected to a low-pressure brine withdrawal duct.

The ducts of the hydraulic manifold unit and the ducts of the filter and membrane element units may be provided, at the connection points thereof, with hydraulic quick-disconnecting joints provided with shutoff elements.

These technical effects are achieved in a reverse osmosis desalination module comprising four units, in particular, a filter unit and three sequentially docked units, including a hydraulic drive unit, a hydraulic manifold unit, and a membrane element unit, the hydraulic manifold unit having a housing capable of being connected to the housing of the hydraulic manifold unit of an adjacent reverse osmosis desalination module and arranged inside the housing: three main ducts: in particular, a duct to deliver low-pressure salt water; a duct to withdraw brine under low pressure, and a duct to withdraw desalted water; ducts to deliver salt water under high pressure from the hydraulic drive unit to the membrane element unit and to deliver high-pressure brine from the membrane element unit to the hydraulic drive unit; a duct to deliver low-pressure salt water to the filter unit from a respective main duct and a duct to withdraw low-pressure brine from the hydraulic drive unit; and a duct to withdraw desalted water from the membrane element unit to a respective main duct, the filter unit being provided in a housing mounted on the housing of the hydraulic drive unit or on the housing of the hydraulic manifold unit, and ducts provided within the housing to deliver low-pressure salt water to the filter and withdraw the same therefrom, said ducts being connected to a respective duct of the hydraulic manifold unit through a quick-disconnecting joint and to a respective duct of the hydraulic drive unit.

The filter unit may be designed as a exchangeable module.

The filter unit may be of a self-cleaning type and be further provided with a duct to remove particles retained by the filter, said duct being connected to a brine withdrawal duct. Furthermore, the brine withdrawal duct may be provided in the hydraulic drive unit or in the hydraulic manifold unit. Alternatively, the filter unit may further be provided with a low-pressure brine withdrawal duct connected to the respective ducts of the hydraulic drive and hydraulic manifold units.

The ducts of the hydraulic manifold unit and the ducts of the membrane element and the hydraulic drive units may be provided, at the connection points thereof, with hydraulic quick-disconnecting joints having shutoff elements.

These technical results are achieved in a reverse osmosis desalination module comprising three sequentially docked units, in particular, a hydraulic drive unit having a filter for low-pressure salt water delivered to the hydraulic drive unit; a hydraulic manifold unit, and a membrane element unit, the hydraulic manifold unit being provided with a housing capable of being connected to the housing of the hydraulic manifold unit of an adjacent reverse osmosis desalination module, and arranged inside the housing: three main ducts : in particular, a duct to deliver low-pressure salt water, a duct to withdraw low-pressure brine, and a duct to withdraw desalted water; ducts to deliver salt water under high pressure to the membrane element unit from the hydraulic drive unit and high-pressure brine to the hydraulic drive unit from the membrane element unit; ducts connecting the hydraulic drive unit to the main ducts in the hydraulic manifold unit to deliver low-pressure salt water and withdraw low-pressure brine; and a duct to withdraw desalted water from the membrane element unit to a respective main duct.

The low-pressure salt water filter of the hydraulic drive unit may be designed as an exchangeable module having a housing mounted on the housing of the rest of the hydraulic drive unit and ducts provided within the housing to deliver low-pressure salt water to, and withdraw the same from, the filter and connected to the respective duct of the hydraulic manifold unit through a quick-disconnecting joint provided with a shutoff element and to the respective duct of the rest of the hydraulic drive unit.

The low-pressure salt water filter may have a self-cleaning design and be provided further with a duct to remove particles retained by the filter, said duct being connected to a duct withdrawing low-pressure brine from the hydraulic drive.

The ducts of the hydraulic manifold unit may be provided, at the points of connection thereof to the hydraulic drive and membrane element units, with hydraulic quick-disconnecting joints having shutoff elements.

These technical results are achieved in a reverse osmosis desalination module comprising three sequentially docked units, in particular, a hydraulic drive unit, a hydraulic manifold unit provided with a filter for low-pressure salt water flowing into the hydraulic drive unit, and a membrane element unit, said hydraulic manifold unit having a housing capable of being connected to the housing of the hydraulic manifold unit of an adjacent reverse osmosis desalination module, and arranged inside the housing: three main ducts : to deliver low-pressure salt water, withdraw brine under low pressure, and withdraw desalted water, respectively; ducts to deliver salt water under high pressure to the membrane element unit from the hydraulic drive unit and high-pressure brine to the hydraulic drive unit from the membrane element unit; ducts connecting the hydraulic drive unit to the main ducts within the hydraulic manifold unit, including a duct to deliver low-pressure salt water, having a low-pressure salt water filter, and to withdraw low-pressure brine; and a duct to withdraw desalted water from the membrane element unit into a respective main duct.

The low-pressure salt water filter of the hydraulic manifold unit may be designed as an exchangeable module having a housing mounted on the housing of the rest of the hydraulic manifold unit and ducts provided within the housing to deliver low-pressure salt water to, and withdraw the same from, the filter and connected to a respective duct of the hydraulic drive unit through a quick-disconnecting joint having a shutoff element and to the respective duct of the rest of the hydraulic manifold unit. The low-pressure salt water filter may be of a self-cleaning type and be further provided with a duct to remove particles retained by the filter, said duct being connected to the main duct to withdraw low-pressure brine.

The ducts of the hydraulic manifold unit may be provided, at the points of connection thereof to the hydraulic drive and membrane element units, with hydraulic quick-disconnecting joints having shutoff elements.

In all embodiments of the claimed module, the hydraulic drive unit may comprise an electric motor, a booster pump, and a recuperator combined with a high-pressure axial plunger pump.

Also in all embodiments of the claimed module, an electric power supply unit and an electronic control unit may be provided on the hydraulic manifold unit, making the reverse osmosis desalination module completely autonomous.

### BRIEF DESCRIPTION OF THE DRAWINGS

FIG. 1 is a schematic diagram of the claimed autonomous reverse osmosis desalination module according to a first embodiment of the invention.
FIG. 2 is a schematic diagram of the claimed autonomous reverse osmosis desalination module according to a second embodiment of the invention.
FIG. 3 is a schematic diagram of the claimed autonomous reverse osmosis desalination module according to a third embodiment of the invention.
FIG. 4 is a schematic diagram of the claimed autonomous reverse osmosis desalination module according to a fourth embodiment of the invention.
FIG. 5 is a general view of a reverse osmosis desalination plant using several autonomous desalination modules.

### DESCRIPTION OF PREFERRED EMBODIMENTS OF THE INVENTION

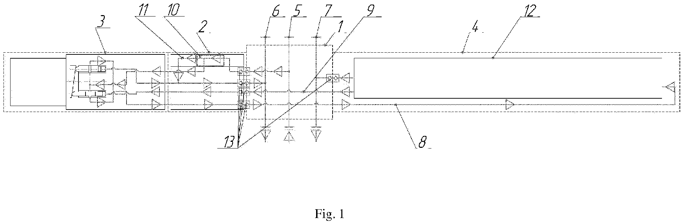

The reverse osmosis desalination plant module illustrated in FIG. 1 comprises a hydraulic manifold unit 1 having an automatic self-cleaning fine filter 2 and a hydraulic drive unit 3 connected to one side thereof and a reverse osmosis membrane element 4 connected to the opposite side thereof.

Hydraulic manifold unit 1 is provided with three main ducts connected sequentially within the reverse osmosis plant to the main ducts of the hydraulic manifold unit of an adjacent autonomous reverse osmosis desalination module, in particular, a duct 5 to deliver salt water at a pressure of 3 to 5 atm., a duct 6 to withdraw brine at a pressure of 3 to 5 atm. (to the drain), and a duct 7 to withdraw desalted water. Hydraulic manifold unit 1 also contains a further duct 8 to deliver salt water at a pressure of 59 to 60 atm. from hydraulic drive unit 3 through automatic self-cleaning fine filter 2 to reverse osmosis membrane element unit 4; a duct 9 to deliver brine at a pressure of 59 to 60 atm. from reverse osmosis membrane element unit 4 to hydraulic drive unit 3 through automatic self-cleaning fine filter 2; and ducts connecting hydraulic drive unit 3 to the main ducts within hydraulic manifold unit 1 through automatic self-cleaning fine filter 2.

Hydraulic manifold unit 1 serves to connect the respective ducts between the units of an autonomous reverse osmosis desalination module and between the adjacent modules in a reverse osmosis desalination plant, and also performs a supporting function for connection of the module units and for connection of the autonomous reverse osmosis desalination modules in a reverse osmosis desalination plant.

Hydraulic drive unit 3 comprises an electric motor and a high-pressure axial plunger pump, a recuperator, and a booster pump provided structurally in a single unit. Hydraulic drive unit 3 is designed to develop a high salt water pressure needed for carrying out a reverse osmosis pressure and reusing the energy of brine withdrawn from reverse osmosis membrane element unit 4.

Automatic self-cleaning fine filter unit 2 comprises a housing receiving a filter element 10 and a self-cleaning mechanism. The housing of this unit contains ducts to deliver salt water at a pressure of 3 to 5 atm. from hydraulic manifold unit 1 to a filter element section, and then, upon completion of the filtering process, to hydraulic drive unit 3; deliver brine at a pressure of 59 to 60 atm. from hydraulic manifold unit 1 to hydraulic drive unit 3; withdraw the brine at a pressure of 3 to 5 atm. from hydraulic drive unit 3 to hydraulic manifold unit 1; and also a duct to deliver salt water at a pressure of 59 to 60 atm. from hydraulic drive unit 3 to hydraulic manifold unit 1, and a duct 11 to remove particles retained by filter element 10, said duct 11 connecting the self-cleaning section of filter element 10 to a duct to withdraw brine at a pressure of 3 to 5 atm. from hydraulic drive unit 3 to hydraulic manifold unit 1 for removing particles retained by filter element 10 to the duct for withdrawing brine at a pressure of 3 to 5 atm. (to the drain), and for discharging it from the module thereafter.

Automatic self-cleaning fine filter unit 2 serves to filter salt water delivered from outside sources to hydraulic drive unit 3 and thereafter to reverse osmosis membrane element unit 4.

Reverse osmosis membrane element unit 4 comprises a housing to receive a reverse osmosis membrane element 12 and a separate duct 8 to deliver salt water at a pressure of 59 to 60 atm. to reverse osmosis membrane element 12.

Reverse osmosis membrane element unit 4 serves to carry out a reverse osmosis process to desalinate seawater.

All the ducts of hydraulic manifold unit 1, reverse osmosis membrane element unit 4, automatic self-cleaning fine filter unit 2, and hydraulic drive unit 3 are provided, at the connection points between one another, with hydraulic quick-disconnecting joints provided with shutoff elements 13. The hydraulic quick-disconnecting joints having shutoff elements 13 serve to shut off liquid flows in the ducts upon disconnection of hydraulic drive unit 3 and automatic self-cleaning fine filter unit 2 from hydraulic manifold unit 1 and to extract reverse osmosis membrane element 12 out of reverse osmosis membrane unit 4 during maintenance and repair. Significantly, these jobs may be conducted when the reverse osmosis plant consisting of several desalination modules is in operation, which means that seawater desalination is not interrupted.

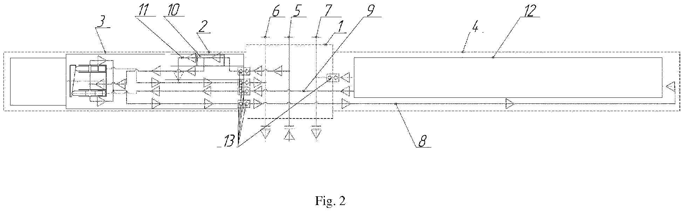

The module of a reverse osmosis desalination plant shown in FIG. 2 also comprises hydraulic manifold unit 1 having automatic self-cleaning fine filter unit 2 and hydraulic drive unit 3 connected to one side thereof and reverse osmosis membrane element unit 4 connected to the opposite side thereof. This, the second, embodiment of the invention is different in that automatic self-cleaning fine filter unit 2 is not provided with through-flow ducts and, accordingly, it is mounted on hydraulic manifold unit 1 connected to a duct to deliver salt water at a pressure of 3 to 5 atm. and duct 11 to remove particles retained by filter element 10. In this embodiment, unit 2 is connected by a duct delivering salt water at a pressure of 3 to 5 atm. to hydraulic manifold unit 1 as well.

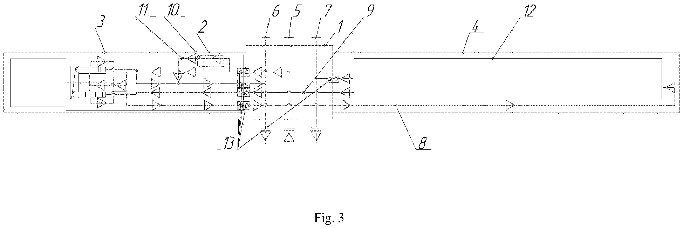

As illustrated in FIG. 3, the module of a reverse osmosis desalination plant comprises three units, in particular, a hydraulic manifold unit 1, a hydraulic drive unit 3, and a reverse osmosis membrane element unit. Self-cleaning fine filter unit 2 is integrated into hydraulic drive unit 3.

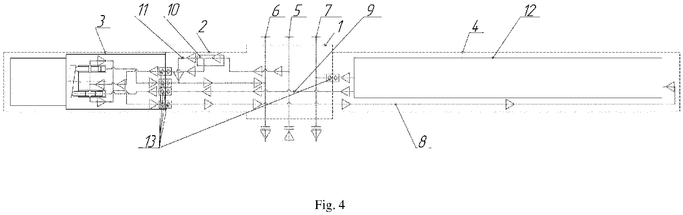

The module of a reverse osmosis desalination plant shown in FIG. 4 comprises three units as well, in particular, a hydraulic manifold unit 1, a hydraulic drive unit 3, and a reverse osmosis membrane element unit, but its self-cleaning fine filter unit 2 is integrated into hydraulic manifold unit 1.

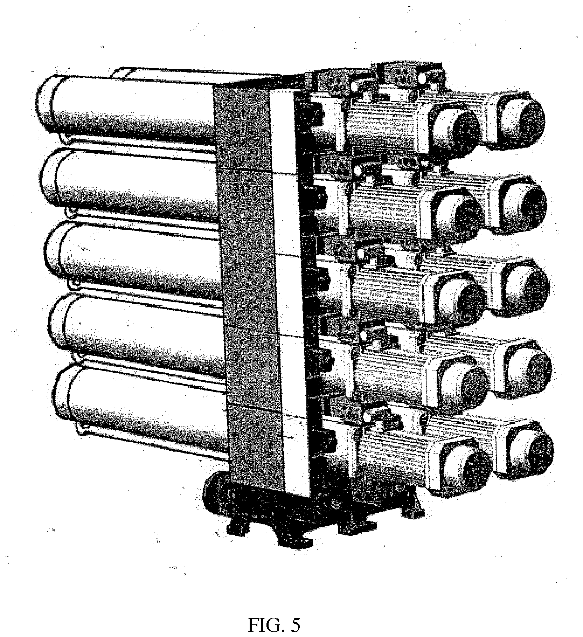

The desalination plant shown in FIG. 5 comprises several autonomous reverse osmosis desalination modules of any one of the embodiments described above. The modules are arranged in parallel to reduce the dimensions of the plant as a whole, simplify operation of the plant, and make it easy to repair. Furthermore, several stacks of parallel modules may be provided such that the modules of adjacent stacks are joined together by dovetail slots provided in the side surfaces of the hydraulic manifold unit housing of each module. The ducts extending through the hydraulic manifold unit of the last module (topmost module as shown in FIG. 5) or, if the module is used alone, are plugged.

A separate power supply and electronic control system is used with each of the above-described embodiments of the desalination module. It comprises an electric motor controller and a power supply unit having electrical interfaces. It is designed to connect adjacent autonomous reverse osmosis desalination modules in a reverse osmosis desalination plant and to feed electric power to them and to supply electric power directly to the electric motor of hydraulic drive unit 3 through the electric motor controller via a power bus and to send control signals and take control data readings via a digital bus. The separate power supply and electronic control system is provided with moisture-protected electrical interfaces for connecting the electric motor and electric motor controller to the power supply unit. The electrical interfaces permit the electric motor to be disconnected from the power mains when hydraulic drive unit 3 is taken down for repair or maintenance. Separate power supply and electronic control of a desalination module enable control of a reverse osmosis desalination plant consisting of several autonomous reverse osmosis modules using remote access to the module or plant, for example, through the Internet.

## Claims

1. A reverse osmosis desalination module comprising:
four sequentially docked units: a hydraulic drive unit (3), a filter unit (2), a hydraulic manifold unit (1), and a membrane element unit (4),
wherein the hydraulic drive unit (3) comprises an electric motor and a high-pressure axial plunger pump, a recuperator, and a booster pump provided structurally in a single unit,
wherein the filter unit (2) comprises a housing receiving a filter element (10), wherein the housing of this unit contains a duct to deliver salt water from the hydraulic manifold unit (1) to the filter element (10), a duct to deliver salt water from the filter element (10) to the hydraulic drive unit (3), a duct to deliver brine from the hydraulic manifold unit (1) to the hydraulic drive unit (3), a duct to withdraw brine from the hydraulic drive unit (3) to the hydraulic manifold unit (1), and a duct to deliver salt water from the hydraulic drive unit (3) to the hydraulic manifold unit (1),
wherein the membrane element unit (4) comprises a reverse osmosis membrane element (12) and a housing to receive the reverse osmosis membrane element (12) and a separate duct (8) to deliver salt water to the reverse osmosis membrane element (12),
wherein the hydraulic manifold unit (1) has a housing capable of being joined to the housing of the hydraulic manifold unit of an adjacent reverse osmosis desalination module and is made with the following ducts being arranged inside the housing: three main ducts: a duct to deliver low-pressure salt water (5) to the filter unit (2), said low-pressure salt water being filtered before delivery to the hydraulic drive unit (3), a duct to withdraw low-pressure brine (6) from the hydraulic drive unit (3) and to remove filtered particles from the filter unit (2), and a duct to withdraw desalted water (7) from the membrane element unit (4); a duct to deliver high-pressure salt water to the membrane element unit (4), wherein said high-pressure salt water is delivered through the filter unit (2) from the hydraulic drive unit (3), and a duct (9) to withdraw high-pressure brine from the membrane element unit (4) to the hydraulic drive unit (3) through the filter unit (2), and
wherein the hydraulic manifold unit (1) performs a supporting function for connection of the module units (2, 3, 4) of the reverse osmosis desalination module and for connection of several autonomous reverse osmosis desalination modules in a reverse osmosis desalination plant.

2. A desalination module of claim 1, wherein the filter unit (2) is of a self-cleaning type and is further provided with a duct to remove particles retained by the filter, said duct being connected to the duct withdrawing low-pressure brine.

3. A desalination module of claim 1, wherein ducts of the hydraulic manifold unit (1) and ducts of the filter and membrane element units (2, 4) are provided, at the connection points thereof, with hydraulic quick-disconnecting joints having shutoff elements (13).

4. A reverse osmosis desalination module comprising
four units: a filter unit (2) and the following three sequentially docked units: a hydraulic drive unit (3), a hydraulic manifold unit (1) and a membrane element unit (4), wherein the hydraulic drive unit (3) comprises an electric motor and a high-pressure axial plunger pump, a recuperator, and a booster pump provided structurally in a single unit, wherein the hydraulic manifold unit (1) has a housing capable of being joined to the housing of the hydraulic manifold unit of an adjacent reverse osmosis desalination module, and is made with the following ducts being arranged inside the housing:
three main ducts to deliver low-pressure salt water (5), withdraw low-pressure brine (6), and withdraw desalted water (7);
ducts to deliver high-pressure salt water from the hydraulic drive unit (3) to the membrane element unit (4) and high-pressure brine from the membrane element unit (4) to the hydraulic drive unit (3);
a duct to deliver low-pressure salt water to the filter unit (2) and a duct to withdraw low-pressure brine from the hydraulic drive unit (3); and
a duct to withdraw desalted water from the membrane element unit (4) to a respective main duct (7),
wherein the membrane element unit (4) comprises a reverse osmosis membrane element (12) and a housing to receive the reverse osmosis membrane element (12) and a separate duct (8) to deliver salt water to the reverse osmosis membrane element (12),
said filter unit (2) being provided in a housing mounted on the housing of the hydraulic drive unit (3) or on the housing of the hydraulic manifold unit (1), and ducts provided within the housing to deliver low-pressure salt water to the filter and withdraw the same therefrom, said ducts being connected to the respective duct of the hydraulic manifold unit (1) through a quick-disconnecting joint and to a respective duct of the hydraulic drive unit (3), and
wherein the hydraulic manifold unit (1) performs a supporting function for connection of the module units (3, 4) of the reverse osmosis desalination module and for connection of several autonomous reverse osmosis desalination modules in a reverse osmosis desalination plant.

5. A desalination module of claim 4, wherein the filter unit (2) is an exchangeable module.

6. A desalination module of claim 4, wherein the filter unit (2) is of a self-cleaning type and is further provided with a duct to remove particles retained by the filter, said duct being connected to a duct to withdraw low-pressure brine.

7. A desalination module of claim 4, wherein the ducts of the hydraulic manifold unit (1) and the ducts of the membrane element and hydraulic drive units (3, 4) are provided, at the connection points thereof, with hydraulic quick-disconnecting joints having shutoff elements (13).

8. A reverse osmosis desalination module comprising
three sequentially docked units: a hydraulic drive unit (3), a hydraulic manifold unit (1), and a membrane element unit (4),
wherein the hydraulic drive unit (3) comprises a low-pressure salt water filter (2),
wherein the hydraulic manifold unit (1) has a housing capable of being connected to the housing of the hydraulic manifold unit of an adjacent reverse osmosis desalination module and is made with the following ducts being arranged inside the housing:
three main ducts to deliver low-pressure salt water (5), withdraw low-pressure brine (6), and withdraw desalted water (7);
ducts to deliver high-pressure salt water to the membrane element unit (4) from the hydraulic drive unit (3) and high-pressure brine to the hydraulic drive unit (3) from the membrane element unit (4);
ducts connecting the hydraulic drive unit (3) to the main ducts (5, 6, 7) within the hydraulic manifold unit (1) to deliver low-pressure salt water and withdraw low-pressure brine; and
a duct to withdraw desalted water from the membrane element unit (4) to a respective main duct (7);
wherein the membrane element unit (4) comprises a reverse osmosis membrane element (12) and a housing to receive the reverse osmosis membrane element (12) and a separate duct (8) to deliver salt water to the reverse osmosis membrane element (12), and
wherein the hydraulic manifold unit (1) performs a supporting function for connection of the module units (3, 4) of the reverse osmosis desalination module and for connection of several autonomous reverse osmosis desalination modules in a reverse osmosis desalination plant.

9. A desalination module of claim 8, wherein the low-pressure salt water filter (2) is an exchangeable module having a housing mounted on the housing of the rest of the hydraulic drive unit (3), and ducts extending within the housing to deliver low-pressure salt water to the filter (2) and withdraw the same therefrom, said ducts being connected to a respective duct of the hydraulic manifold unit (1) through a quick-disconnecting joint having a shutoff element (13) and to a respective duct of the rest of the hydraulic drive unit (3).

10. A desalination module of claim 9, wherein the low-pressure salt water filter (2) of the hydraulic drive unit (3) is of a self-cleaning type and is further provided with a duct to remove particles retained by the filter (2), said duct being connected to the duct to withdraw low-pressure brine from the hydraulic drive unit (3).

11. A desalination module of claim 10, wherein the ducts of the hydraulic manifold unit (1) are provided, at the connection points of thereof to the hydraulic drive and membrane element units (3, 4), with hydraulic quick-disconnecting joints having shutoff elements (13).

12. A reverse osmosis desalination module comprising
three sequentially docked units: a hydraulic drive unit (3), a hydraulic manifold unit (1), and a membrane element unit (4),
wherein the hydraulic manifold unit (1) has a housing capable of being connected to the housing of the hydraulic manifold unit of an adjacent reverse osmosis module and comprises a low-pressure salt water filter (2) and is made with the following ducts being arranged inside the housing:
three main ducts to deliver low-pressure salt water (5), withdraw low-pressure brine (6), and withdraw desalted water (7);
ducts to deliver high-pressure salt water to the membrane element unit (4) from the hydraulic drive unit (3) and high-pressure brine to the hydraulic drive unit (3) from the membrane element unit (4);
ducts connecting the hydraulic drive unit (3) to the main ducts in the hydraulic manifold unit (1),
a duct to deliver low-pressure salt water containing a low-pressure salt water filter and a duct to withdraw low-pressure brine; and a duct to withdraw desalted water from the membrane element unit (4) to a respective main duct (7),
wherein the membrane element unit (4) comprises a reverse osmosis membrane element (12) and a housing to receive the reverse osmosis membrane element (12) and a separate duct (8) to deliver salt water to the reverse osmosis membrane element (12), and
wherein the hydraulic manifold unit (1) performs a supporting function for connection of the module units (3, 4) of the reverse osmosis desalination module and for connection of several autonomous reverse osmosis desalination modules in a reverse osmosis desalination plant.

13. A desalination module of claim 12, wherein the low-pressure salt water filter (2) of the hydraulic manifold unit (1) is an exchangeable module having a housing mounted on the housing of the rest of the hydraulic manifold unit (1) and ducts extending within the housing to deliver low-pressure salt water to the filter (2) and withdraw the same therefrom, said ducts being connected to a respective duct of the hydraulic drive unit (3) through a quick-disconnecting joint having a shutoff element (13) and to a respective duct in the rest of the hydraulic manifold unit (1).

14. A desalination module of claim 13, wherein the low-pressure salt water filter (2) of the hydraulic manifold unit (1) is of a self-cleaning type and is further provided with a duct to remove particles retained by the filter (2), said duct being connected to a main duct to withdraw low-pressure brine (6).

15. A desalination module of claim 12, wherein the ducts of the hydraulic manifold unit (1) are provided, at the points of connection thereof to the hydraulic drive and membrane element units (3, 4), with hydraulic quick-disconnecting joints having shutoff elements (13).

## Patentansprüche

1. Umkehrosmose-Entsalzungsmodul, umfassend:
vier aufeinanderfolgend angedockte Einheiten: eine hydraulische Antriebseinheit (3), eine Filtereinheit (2), eine hydraulische Verteilereinheit (1) und eine Membranelementeinheit (4),
wobei die hydraulische Antriebseinheit (3) einen Elektromotor und eine Hochdruck-Axialkolbenpumpe, einen Rekuperator und eine Boosterpumpe umfasst, die strukturell in einer einzigen Einheit bereitgestellt sind,
wobei die Filtereinheit (2) ein Gehäuse umfasst, das ein Filterelement (10) aufnimmt, wobei das Gehäuse dieser Einheit umfasst einen Kanal zum Zuführen von Salzwasser von der hydraulischen Verteilereinheit (1) zu dem Filterelement (10), einen Kanal zum Zuführen von Salzwasser von dem Filterelement (10) zu der hydraulischen Antriebseinheit (3), einen Kanal zum Zuführen von Sole von der hydraulischen Verteilereinheit (1) zur hydraulischen Antriebseinheit (3), einen Kanal zum Abziehen von Sole von der hydraulischen Antriebseinheit (3) zur hydraulischen Verteilereinheit (1) und einen Kanal zum Zuführen von Salzwasser von der hydraulischen Antriebseinheit (3) zur hydraulischen Verteilereinheit (1),
wobei die Membranelementeinheit (4) ein Umkehrosmose-Membranelement (12) und ein Gehäuse zur Aufnahme des Umkehrosmose-Membranelements (12) und einen separaten Kanal (8) zur Zufuhr von Salzwasser zu dem Umkehrosmose-Membranelement (12) umfasst,
wobei die hydraulische Verteilereinheit (1) ein Gehäuse aufweist, das mit dem Gehäuse der hydraulischen Verteilereinheit eines benachbarten Umkehrosmose-Entsalzungsmoduls verbindbar ist, und mit den folgenden innerhalb des Gehäuses angeordneten Kanälen hergestellt ist: drei Hauptkanäle: einen Kanal zum Zuführen von Niederdrucksalzwasser (5) zu der Filtereinheit (2), wobei das Niederdrucksalzwasser vor der Abgabe an die hydraulische Antriebseinheit (3) gefiltert wird, einen Kanal zum Abziehen von Niederdrucksole (6) aus der hydraulischen Antriebseinheit (3) und zum Entfernen von gefilterten Partikeln aus der Filtereinheit (2) und einen Kanal zum Abziehen von entsalztem Wasser (7) aus der Membranelementeinheit (4); einen Kanal zum Zuführen von Hochdruck-Salzwasser zu der Membranelementeinheit (4), wobei das Hochdruck-Salzwasser durch die Filtereinheit (2) von der hydraulischen Antriebseinheit (3) geliefert wird, und einen Kanal (9) zum Abziehen von Hochdruck-Sole von der Membranelementeinheit (4) zu der hydraulischen Antriebseinheit (3) durch die Filtereinheit (2), und
wobei die hydraulische Verteilereinheit (1) eine unterstützende Funktion zum Anschluss der Moduleinheiten (2, 3, 4) des Umkehrosmose-Entsalzungsmoduls und zum Anschluss mehrerer autonomer Umkehrosmose-Entsalzungsmodule in einer Umkehrosmose-Entsalzungsanlage erfüllt.

2. Entsalzungsmodul nach Anspruch 1, wobei die Filtereinheit (2) selbstreinigend ist und ferner mit einem Kanal zum Entfernen von vom Filter zurückgehaltenen Partikeln versehen ist, wobei der Kanal mit dem Kanal zum Abziehen von Niederdrucksole verbunden ist.

3. Entsalzungsmodul nach Anspruch 1, wobei Kanäle der hydraulischen Verteilereinheit (1) und Kanäle der Filter- und Membranelementeinheiten (2, 4) an ihren Anschlusspunkten mit hydraulischen Schnelltrennverbindungen mit Absperrelementen (13) versehen sind.

4. Umkehrosmose-Entsalzungsmodul, umfassend
vier Einheiten: eine Filtereinheit (2) und die folgenden drei aufeinanderfolgend angedockten Einheiten: eine hydraulische Antriebseinheit (3), eine hydraulische Verteilereinheit (1) und eine Membranelementeinheit (4), wobei die hydraulische Antriebseinheit (3) einen Elektromotor und eine Hochdruck-Axialkolbenpumpe, einen Rekuperator und eine Druckerhöhungspumpe umfasst, die strukturell in einer einzigen Einheit bereitgestellt sind, wobei die hydraulische Verteilereinheit (1) ein Gehäuse aufweist, das mit dem Gehäuse der hydraulischen Verteilereinheit eines benachbarten Umkehrosmose-Entsalzungsmoduls verbunden werden kann, und mit den folgenden innerhalb des Gehäuses angeordneten Kanälen hergestellt ist:
drei Hauptkanäle zur Versorgung mit Niederdrucksalzwasser (5), zum Abziehen von Niederdrucksole (6) und zum Abziehen von entsalztem Wasser (7);
Kanäle, um Hochdruck-Salzwasser von der hydraulischen Antriebseinheit (3) zur Membranelementeinheit (4) und Hochdruck-Sole von der Membranelementeinheit (4) zur hydraulischen Antriebseinheit (3) zu fördern;
einen Kanal zum Zuführen von Niederdrucksalzwasser zur Filtereinheit (2) und einen Kanal zum Abziehen von Niederdrucksole aus der hydraulischen Antriebseinheit (3); und
einen Kanal zum Abziehen von entsalztem Wasser aus der Membranelementeinheit (4) zu einem jeweiligen Hauptkanal (7),
wobei die Membranelementeinheit (4) ein Umkehrosmose-Membranelement (12) und ein Gehäuse zur Aufnahme des Umkehrosmose-Membranelements (12) und einen separaten Kanal (8) zur Zufuhr von Salzwasser zu dem Umkehrosmose-Membranelement (12) umfasst,
wobei die Filtereinheit (2) in einem Gehäuse vorgesehen ist, das am Gehäuse der hydraulischen Antriebseinheit (3) oder am Gehäuse der hydraulischen Verteilereinheit (1) montiert ist, und wobei innerhalb des Gehäuses Kanäle vorgesehen sind, um Niederdrucksalzwasser zum Filter zuzuführen und daraus abzuziehen, wobei die Kanäle über eine Schnelltrennverbindung mit dem jeweiligen Kanal der hydraulischen Verteilereinheit (1) und mit einem jeweiligen Kanal der hydraulischen Antriebseinheit (3) verbunden sind, und
wobei die hydraulische Verteilereinheit (1) eine unterstützende Funktion zum Anschluss der Moduleinheiten (3, 4) des Umkehrosmose-Entsalzungsmoduls und zum Anschluss mehrerer autonomer Umkehrosmose-Entsalzungsmodule in einer Umkehrosmose-Entsalzungsanlage erfüllt.

5. Entsalzungsmodul nach Anspruch 4, wobei die Filtereinheit (2) ein austauschbares Modul ist.

6. Entsalzungsmodul nach Anspruch 4, wobei die Filtereinheit (2) selbstreinigend ist und ferner mit einem Kanal zum Entfernen von vom Filter zurückgehaltenen Partikeln versehen ist, wobei der Kanal mit einem Kanal zum Abziehen von Niederdrucksole verbunden ist.

7. Entsalzungsmodul nach Anspruch 4, wobei die Kanäle der hydraulischen Verteilereinheit (1) und die Kanäle des Membranelements und der hydraulischen Antriebseinheiten (3, 4) an ihren Anschlusspunkten mit hydraulischen Schnelltrennverbindungen mit Absperrelementen (13) versehen sind.

8. Umkehrosmose-Entsalzungsmodul, umfassend
drei aufeinanderfolgend angedockte Einheiten: eine hydraulische Antriebseinheit (3), eine hydraulische Verteilereinheit (1) und eine Membranelementeinheit (4), wobei die hydraulische Antriebseinheit (3) einen Niederdrucksalzwasserfilter (2) umfasst,
wobei die hydraulische Verteilereinheit (1) ein Gehäuse aufweist, das mit dem Gehäuse der hydraulischen Verteilereinheit eines benachbarten Umkehrosmose-Entsalzungsmoduls verbunden werden kann, und mit den folgenden Kanälen hergestellt ist, die innerhalb des Gehäuses angeordnet sind:
drei Hauptkanäle zur Versorgung mit Niederdrucksalzwasser (5), zum Abziehen von Niederdrucksole (6) und zum Abziehen von entsalztem Wasser (7);
Kanäle, um der Membranelementeinheit (4) von der hydraulischen Antriebseinheit (3) Hochdruck-Salzwasser und der hydraulischen Antriebseinheit (3) von der Membranelementeinheit (4) Hochdruck-Sole zuzuführen;
Kanäle, welche die hydraulische Antriebseinheit (3) mit den Hauptkanälen (5, 6, 7) innerhalb der hydraulischen Verteilereinheit (1) verbinden, um Niederdrucksalzwasser zu liefern und Niederdrucksole abzuziehen; und
einen Kanal zum Abziehen von entsalztem Wasser aus der Membranelementeinheit (4) zu einem jeweiligen Hauptkanal (7);
wobei die Membranelementeinheit (4) ein Umkehrosmose-Membranelement (12) und ein Gehäuse zur Aufnahme des Umkehrosmose-Membranelements (12) und einen separaten Kanal (8) zur Zufuhr von Salzwasser zu dem Umkehrosmose-Membranelement (12) umfasst, und
wobei die hydraulische Verteilereinheit (1) eine unterstützende Funktion zum Anschluss der Moduleinheiten (3, 4) des Umkehrosmose-Entsalzungsmoduls und zum Anschluss mehrerer autonomer Umkehrosmose-Entsalzungsmodule in einer Umkehrosmose-Entsalzungsanlage erfüllt.

9. Entsalzungsmodul nach Anspruch 8, wobei der Niederdrucksalzwasserfilter (2) ein austauschbares Modul mit einem Gehäuse ist, das am Gehäuse des Restes der hydraulischen Antriebseinheit (3) montiert ist, und Kanälen, die sich innerhalb des Gehäuses erstrecken, um dem Filter (2) Niederdrucksalzwasser zuzuführen und dieses zu entnehmen, wobei die Kanäle mit einem jeweiligen Kanal der hydraulischen Verteilereinheit (1) durch eine Schnelltrennverbindung mit einem Absperrelement (13) und mit einem entsprechenden Kanal des Restes der hydraulischen Antriebseinheit (3) verbunden sind.

10. Entsalzungsmodul nach Anspruch 9, wobei der Niederdrucksalzwasserfilter (2) der hydraulischen Antriebseinheit (3) selbstreinigend ist und ferner mit einem Kanal zum Entfernen von durch den Filter (2) zurückgehaltenen Partikeln versehen ist, wobei der Kanal mit dem Kanal zum Abziehen von Niederdrucksole aus der hydraulischen Antriebseinheit (3) verbunden ist.

11. Entsalzungsmodul nach Anspruch 10, wobei die Kanäle der hydraulischen Verteilereinheit (1) an ihren Verbindungspunkten mit den hydraulischen Antriebs- und Membranelementeinheiten (3, 4) mit hydraulischen Schnelltrennverbindungen mit Absperrelementen (13) versehen sind.

12. Umkehrosmose-Entsalzungsmodul, umfassend
drei aufeinanderfolgend angedockte Einheiten: eine hydraulische Antriebseinheit (3), eine hydraulische Verteilereinheit (1) und eine Membranelementeinheit (4),
wobei die hydraulische Verteilereinheit (1) ein Gehäuse aufweist, das mit dem Gehäuse der hydraulischen Verteilereinheit eines benachbarten Umkehrosmosemoduls verbindbar ist, und einen Niederdrucksalzwasserfilter (2) umfasst und mit den folgenden Kanälen hergestellt ist, die innerhalb des Gehäuses angeordnet sind:
drei Hauptkanäle zur Versorgung mit Niederdrucksalzwasser (5), zum Abziehen von Niederdrucksole (6) und zum Abziehen von entsalztem Wasser (7);
Kanäle, um der Membranelementeinheit (4) von der hydraulischen Antriebseinheit (3) Hochdruck-Salzwasser und der hydraulischen Antriebseinheit (3) von der Membranelementeinheit (4) Hochdruck-Sole zuzuführen;
Kanäle, die die hydraulische Antriebseinheit (3) mit den Hauptkanälen in der hydraulischen Verteilereinheit (1) verbinden,
einen Kanal zum Zuführen von Niederdrucksalzwasser, das einen Niederdrucksalzwasserfilter und einen Kanal zum Abziehen von Niederdrucksole enthält; und einen Kanal zum Abziehen von entsalztem Wasser aus der Membranelementeinheit (4) zu einem entsprechenden Hauptkanal (7),
wobei die Membranelementeinheit (4) ein Umkehrosmose-Membranelement (12) und ein Gehäuse zur Aufnahme des Umkehrosmose-Membranelements (12) und einen separaten Kanal (8) zur Zufuhr von Salzwasser zu dem Umkehrosmose-Membranelement (12) umfasst, und
wobei die hydraulische Verteilereinheit (1) eine unterstützende Funktion zum Anschluss der Moduleinheiten (3, 4) des Umkehrosmose-Entsalzungsmoduls und zum Anschluss mehrerer autonomer Umkehrosmose-Entsalzungsmodule in einer Umkehrosmose-Entsalzungsanlage erfüllt.

13. Entsalzungsmodul nach Anspruch 12, wobei der Niederdrucksalzwasserfilter (2) der hydraulischen Verteilereinheit (1) ein austauschbares Modul ist, das ein am Gehäuse des Restes der hydraulischen Verteilereinheit (1) montiertes Gehäuse und Kanäle besitzt, die sich innerhalb des Gehäuses erstrecken, um dem Filter (2) Niederdrucksalzwasser zuzuführen und daraus abzuziehen, wobei die Kanäle mit einem jeweiligen Kanal der hydraulischen Antriebseinheit (3) über eine Schnelltrennverbindung mit einem Absperrelement (13) und mit einem entsprechenden Kanal im Rest der hydraulischen Verteilereinheit (1) verbunden sind.

14. Entsalzungsmodul nach Anspruch 13, wobei der Niederdrucksalzwasserfilter (2) der hydraulischen Verteilereinheit (1) selbstreinigend ist und ferner mit einem Kanal zum Entfernen von durch den Filter (2) zurückgehaltenen Partikeln versehen ist, wobei der Kanal mit einem Hauptkanal zum Abziehen von Niederdrucksole (6) verbunden ist.

15. Entsalzungsmodul nach Anspruch 12, wobei die Kanäle der hydraulischen Verteilereinheit (1) an ihren Verbindungspunkten mit den hydraulischen Antriebs- und Membranelementeinheiten (3, 4) mit hydraulischen Schnelltrennverbindungen mit Absperrelementen (13) versehen sind.

## Revendications

1. Module de dessalement par osmose inverse comprenant :
quatre unités accouplées séquentiellement : une unité d'entraînement hydraulique (3), une unité de filtration (2), une unité de collecteur hydraulique (1), et une unité d'élément à membrane (4),
dans laquelle l'unité d'entraînement hydraulique (3) comprend un moteur électrique et une pompe à piston axial haute pression, un récupérateur et une pompe de surpression prévus structurellement dans une seule unité,
dans laquelle l'unité de filtration (2) comprend un boîtier recevant un élément filtrant (10), dans lequel le boîtier de cette unité contient un conduit pour délivrer de l'eau salée de l'unité de collecteur hydraulique (1) à l'élément filtrant (10), un conduit pour délivrer de l'eau salée de l'élément filtrant (10) à l'unité hydraulique de commande (3), un conduit pour délivrer de la saumure de l'unité de collecteur hydraulique (1) à l'unité d'entraînement hydraulique (3), un conduit pour retirer de la saumure de l'unité d'entraînement hydraulique (3) à l'unité de collecteur hydraulique (1), et un conduit pour délivrer de l'eau salée à l'unité de collecteur hydraulique (1) de l'unité d'entraînement hydraulique (3),
dans laquelle l'unité d'élément de membrane (4) comprend un élément de membrane d'osmose inverse (12) et un logement pour recevoir l'élément de membrane d'osmose inverse (12) et un conduit séparé (8) pour délivrer l'eau salée à l'élément de membrane d'osmose inverse (12),
dans laquelle l'unité de collecteur hydraulique (1) présente un boîtier pouvant être relié au boîtier de l'unité de collecteur hydraulique d'un module de dessalement par osmose inverse adjacent et est réalisée avec les conduits suivants disposés à l'intérieur du boîtier: trois conduits principaux: un conduit pour délivrer de l'eau salée basse pression (5) à l'unité de filtration (2), ladite eau salée basse pression étant filtrée avant d'être délivrée à l'unité d'entraînement hydraulique (3), un conduit pour extraire la saumure basse pression (6) de l'unité d'entraînement hydraulique (3) et pour retirer les particules filtrées de l'unité de filtration (2), et un conduit pour retirer l'eau dessalée (7) de l'unité à membranes (4); un conduit pour fournir de l'eau salée à haute pression à l'unité d'élément à membrane (4), dans lequel ladite eau salée à haute pression est fournie à travers l'unité de filtre (2) depuis l'unité d'entraînement hydraulique (3), et un conduit (9) pour retirer de la saumure à haute pression de l'unité d'élément à membrane (4) à l'unité d'entraînement hydraulique (3) par le filtre (2), et
dans laquelle l'unité de collecteur hydraulique (1) remplit une fonction de support pour la connexion des unités modulaires (2, 3, 4) du module de dessalement par osmose inverse et pour la connexion de plusieurs modules autonomes de dessalement par osmose inverse dans une installation de dessalement par osmose inverse.

2. Module de dessalement selon la revendication 1, dans lequel l'unité de filtration (2) est du type autonettoyant et est en outre munie d'un conduit pour éliminer les particules retenues par le filtre, ledit conduit étant relié au conduit aspirant la saumure basse pression.

3. Module de dessalement selon la revendication 1, dans lequel des conduits de l'unité de collecteur hydraulique (1) et des conduits des unités d'éléments filtrants et à membrane (2, 4) sont pourvus, à leurs points de raccordement, de raccords rapides hydrauliques ayant des éléments de fermeture (13).

4. Module de dessalement par osmose inverse comprenant
quatre unités : une unité de filtration (2) et les trois unités suivantes connectées l'une après l'autre : une unité d'entraînement hydraulique (3), une unité de collecteur hydraulique (1) et une unité d'élément à membrane (4), dans laquelle l'unité d'entraînement hydraulique (3) comprend un moteur électrique et une pompe à piston axial haute pression, un récupérateur et une pompe de surpression disposés en une seule unité, l'unité de collecteur hydraulique (1) ayant un logement pouvant être relié au logement de l'unité de collecteur hydraulique d'un module adjacent de dessalement par osmose inverse et étant constituée des conduits suivants étant disposés dans le logement :
trois conduites principales pour l'alimentation en eau salée basse pression (5), le prélèvement de saumure basse pression (6) et le prélèvement d'eau dessalée (7) ;
des conduites pour acheminer de l'eau salée à haute pression de l'unité d'entraînement hydraulique (3) vers l'unité à membrane (4) et de la saumure à haute pression de l'unité à membrane (4) vers l'unité d'entraînement hydraulique (3) ;
un conduit pour fournir de l'eau salée à basse pression à l'unité de filtration (2) et un conduit pour extraire la saumure à basse pression de l'unité d'entraînement hydraulique (3) ; et
un conduit pour aspirer l'eau dessalée de l'unité d'élément à membrane (4) vers un conduit principal respectif (7),
dans laquelle l'unité d'élément de membrane (4) comprend un élément de membrane d'osmose inverse (12) et un logement pour recevoir l'élément de membrane d'osmose inverse (12) et un conduit séparé (8) pour délivrer l'eau salée à l'élément de membrane d'osmose inverse (12),
ladite unité de filtration (2) étant prévue dans un boîtier monté sur le boîtier de l'unité d'entraînement hydraulique (3) ou sur le boîtier de l'unité de collecteur hydraulique (1), et des conduits prévus à l'intérieur du boîtier pour fournir de l'eau salée à basse pression au filtre et en retirer de l'eau, lesdits conduits étant reliés au conduit respectif de l'unité de collecteur hydraulique (1) par un raccord à démontage rapide et à un conduit correspondant de l'unité de commande hydraulique (3), et
dans laquelle l'unité de collecteur hydraulique (1) remplit une fonction de support pour la connexion des unités modulaires (3, 4) du module de dessalement par osmose inverse et pour la connexion de plusieurs modules autonomes de dessalement par osmose inverse dans une installation de dessalement par osmose inverse.

5. Module de dessalement selon la revendication 4, **caractérisé en ce que** l'unité de filtration (2) est un module interchangeable.

6. Module de dessalement selon la revendication 4, dans lequel l'unité de filtration (2) est du type autonettoyant et est en outre munie d'un conduit pour éliminer les particules retenues par le filtre, ledit conduit étant relié à un conduit pour extraire la saumure à basse pression.

7. Module de dessalement selon la revendication 4, **caractérisé en ce que** les canaux de l'unité de collecteur hydraulique (1) et les canaux de l'élément à membrane et des unités d'entraînement hydraulique (3, 4) sont pourvus, à leurs points de raccordement, de raccords rapides hydrauliques avec des éléments de fermeture (13).

8. Module de dessalement par osmose inverse comprenant
trois unités accouplées séquentiellement : une unité d'entraînement hydraulique (3), une unité de collecteur hydraulique (1) et une unité à membrane (4), dans laquelle l'unité d'entraînement hydraulique (3) comprend un filtre à eau salée basse pression (2),
dans laquelle l'unité de collecteur hydraulique (1) a un logement pouvant être relié au logement de l'unité de collecteur hydraulique d'un module de dessalement par osmose inverse adjacent et est réalisée avec les conduits suivants disposés à l'intérieur du logement :
trois conduites principales pour l'alimentation en eau salée basse pression (5), le prélèvement de saumure basse pression (6) et le prélèvement d'eau dessalée (7) ;
des conduits pour l'alimentation en eau salée à haute pression de l'unité à membrane (4) à partir de l'unité d'entraînement hydraulique (3) et en saumure à haute pression de l'unité à membrane (4) à l'unité d'entraînement hydraulique (3) ;
des conduits reliant l'unité d'entraînement hydraulique (3) aux conduits principaux (5, 6, 7) à l'intérieur de l'unité de collecteur hydraulique (1) pour fournir de l'eau salée basse pression et prélever de la saumure basse pression ; et
un conduit pour aspirer l'eau dessalée de l'unité d'élément à membrane (4) vers un conduit principal respectif (7) ;
dans laquelle l'unité d'élément de membrane (4) comprend un élément de membrane d'osmose inverse (12) et un logement pour recevoir l'élément de membrane d'osmose inverse (12) et un conduit séparé (8) pour délivrer l'eau salée à l'élément de membrane d'osmose inverse (12), et
dans laquelle l'unité de collecteur hydraulique (1) remplit une fonction de support pour la connexion des unités modulaires (3, 4) du module de dessalement par osmose inverse et pour la connexion de plusieurs modules autonomes de dessalement par osmose inverse dans une installation de dessalement par osmose inverse.

9. Module de dessalement selon la revendication 8, dans lequel le filtre à eau salée basse pression (2) est un module interchangeable comportant un boîtier monté sur le boîtier du reste de l'unité d'entraînement hydraulique (3), et des conduits s'étendant à l'intérieur du boîtier pour fournir de l'eau salée basse pression au filtre (2) et la retirer de celui-ci, lesdits conduits étant reliés à un conduit respectif de l'unité hydraulique multiple (1) par un raccord à séparation rapide ayant un élément de fermeture (13) et un conduit respectif du reste de l'unité hydraulique (3).

10. Module de dessalement selon la revendication 9, dans lequel le filtre à eau salée basse pression (2) de l'unité d'entraînement hydraulique (3) est du type autonettoyant et est en outre pourvu d'un conduit pour éliminer les particules retenues par le filtre (2), ledit conduit étant relié au conduit pour extraire la saumure basse pression de l'unité d'entraînement hydraulique (3).

11. Module de dessalement selon la revendication 10, **caractérisé en ce que** les conduits de l'unité de collecteur hydraulique (1) sont pourvus, à leurs points de raccordement aux unités d'entraînement hydraulique et d'éléments à membrane (3, 4), de raccords rapides hydrauliques ayant des éléments de fermeture (13).

12. Module de dessalement par osmose inverse comprenant
trois unités accouplées séquentiellement : une unité d'entraînement hydraulique (3), une unité de collecteur hydraulique (1), et une unité d'élément à membrane (4),
dans laquelle l'unité de collecteur hydraulique (1) présente un boîtier pouvant être relié au boîtier de l'unité de collecteur hydraulique d'un module d'osmose inverse adjacent et comprend un filtre à eau salée basse pression (2) et est réalisée avec les conduits suivants disposés à l'intérieur du boîtier :
trois conduites principales pour l'alimentation en eau salée basse pression (5), le prélèvement de saumure basse pression (6) et le prélèvement d'eau dessalée (7) ;
des conduits pour l'alimentation en eau salée à haute pression de l'unité à membrane (4) à partir de l'unité d'entraînement hydraulique (3) et en saumure à haute pression de l'unité à membrane (4) à l'unité d'entraînement hydraulique (3) ;
des conduits reliant l'unité d'entraînement hydraulique (3) aux conduits principaux de l'unité du collecteur hydraulique (1),
un conduit pour délivrer de l'eau salée basse pression contenant un filtre d'eau salée basse pression et un conduit pour prélever de la saumure basse pression ; et un conduit pour prélever de l'eau dessalée de l'unité à membrane (4) vers un conduit principal respectif (7),
dans laquelle l'unité d'élément de membrane (4) comprend un élément de membrane d'osmose inverse (12) et un logement pour recevoir l'élément de membrane d'osmose inverse (12) et un conduit séparé (8) pour délivrer l'eau salée à l'élément de membrane d'osmose inverse (12), et
dans laquelle l'unité de collecteur hydraulique (1) remplit une fonction de support pour la connexion des unités modulaires (3, 4) du module de dessalement par osmose inverse et pour la connexion de plusieurs modules autonomes de dessalement par osmose inverse dans une installation de dessalement par osmose inverse.

13. Module de dessalement selon la revendication 12, dans lequel le filtre à eau salée basse pression (2) de l'unité de collecteur hydraulique (1) est un module interchangeable ayant un boîtier monté sur le boîtier du reste de l'unité de collecteur hydraulique (1) et des conduits s'étendant dans le boîtier pour délivrer de l'eau salée basse pression au filtre (2) et la retirer de celui-ci, lesdits conduits étant connectés à un conduit respectif de l'unité de commande hydraulique (3) par un joint à séparation rapide ayant un organe de fermeture (13) et à un conduit respectif dans le reste de l'unité de collecteur hydraulique (1).

14. Module de dessalement selon la revendication 13, dans lequel le filtre à eau salée basse pression (2) de l'unité de collecteur hydraulique (1) est du type autonettoyant et est en outre pourvu d'un conduit pour éliminer les particules retenues par le filtre (2), ledit conduit étant relié à un conduit principal pour extraire la saumure basse pression (6).

15. Module de dessalement selon la revendication 12, **caractérisé en ce que** les conduits de l'unité de collecteur hydraulique (1) sont pourvus, aux points de raccordement de celle-ci aux unités d'entraînement hydraulique et d'éléments à membrane (3, 4), de raccords rapides hydrauliques ayant des éléments de fermeture (13).
